# EUROPEAN PATENT SPECIFICATION

(11) **EP 0 518 235 B1**
(45) Date of publication and mention of the grant of the patent: **15.05.1996**
(21) Application number: 92109560.0
(22) Date of filing: 05.06.1992
(51) Int. Cl.: G01F 23/36

(54) **Liquid level detection apparatus**
Apparat zur Flüssigkeitspegelerfassung
Appareil de détection du niveau d'un liquide

(30) Priority: 13.06.1991 JP 44395/91 U
(43) Date of publication of application: 16.12.1992
(73) Proprietor: YAZAKI CORPORATION, Minato-ku Tokyo 108 (JP)
(72) Inventor: Sato, Yoshitake, Shimada-shi, Shizuoka (JP)
(74) Representative: Grünecker, Kinkeldey, Stockmair & Schwanhäusser Anwaltssozietät

(56) References cited:
- EP-A- 0 001 050
- WO-A-85/03348
- GB-A- 2 047 495
- PATENT ABSTRACTS OF JAPAN vol. 9, no. 157 (P-369)2 July 1985 & JP-60 35 277 ( DIESEL KIKI K.K. )

## Description

### BACKGROUND OF THE INVENTION

The invention relates to a liquid level detection apparatus as indicated in the precharacterizing part of claim 1, having a residual fuel amount warning mechanism.

Conventionally, known is a liquid level detection apparatus in which the level of a liquid surface of fuel is detected on the basis of displacement of a float floated in the liquid surface for the purpose of detecting a residual amount of the fuel in a fuel tank. There has been such a liquid level detection apparatus in which an indication of a predetermined warning symbol is turned on so as to give warning to a driver when a residual amount of fuel comes to be or less than a predetermined value.

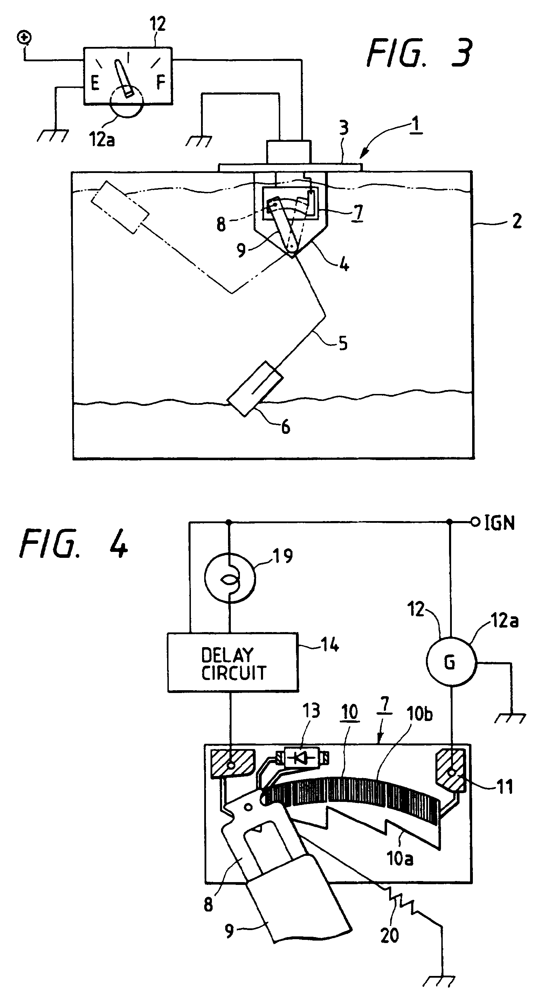

Fig. 3 shows an example of the conventional liquid level detection apparatus 1. A frame 4 of resin is provided at an upper surface opening portion of a fuel tank 2 through a flange 3 so as to project into the tank 2, and a float arm 5 is rotatably attached on a lower end portion of the frame 4. A float 6 floating in a liquid surface in the tank 2 is attached on one end portion of the float arm 5, and a contact holder 9 for holding a contact 8 contacting with a resistance plate 7 provided on the frame 4 is attached on the other end of the float arm 5.

The resistance plate 7 has a resistance portion 10 on which an RuO₂ resistor 10a and an Ag conductor 10b are formed through patterning, and further has an electrode portion 11 as shown in Fig. 4. Further, the contact 8 contacts with the resistance portion 10 and a movement 12a of a fuel meter 12 disposed on a meter board is connected to the electrode portion 11.

In the above liquid level detection apparatus, if the contact 8 slides on the resistance portion 10 of the resistance plate 7 with the up/down movement of the float 6 to thereby change the contact position of the contact 8, the resistance value of the resistance portion 10 changes and a current flowing into the movement 12 changes in accordance with the change of the resistance value so that an indication corresponding to the liquid level is effected in the fuel meter 12.

Further, the liquid level detection apparatus, as shown in Figs. 4 through 6, has a warning mechanism which functions when the value of a residual amount of fuel reaches a predetermined value or less. A diode 13 connected to an end portion of the resistance portion 10 corresponding to the fuel empty side is provided on the resistance plate 7 so as to function as a switch of the warning mechanism. In the warning mechanism, when the contact 8 sliding on the resistance portion 10 moves from the connection portion of the diode 13 to a resistance portion 10_{c} at the empty side, an electric lamp 19 to be described later is switched on so as to effect predetermined indication.

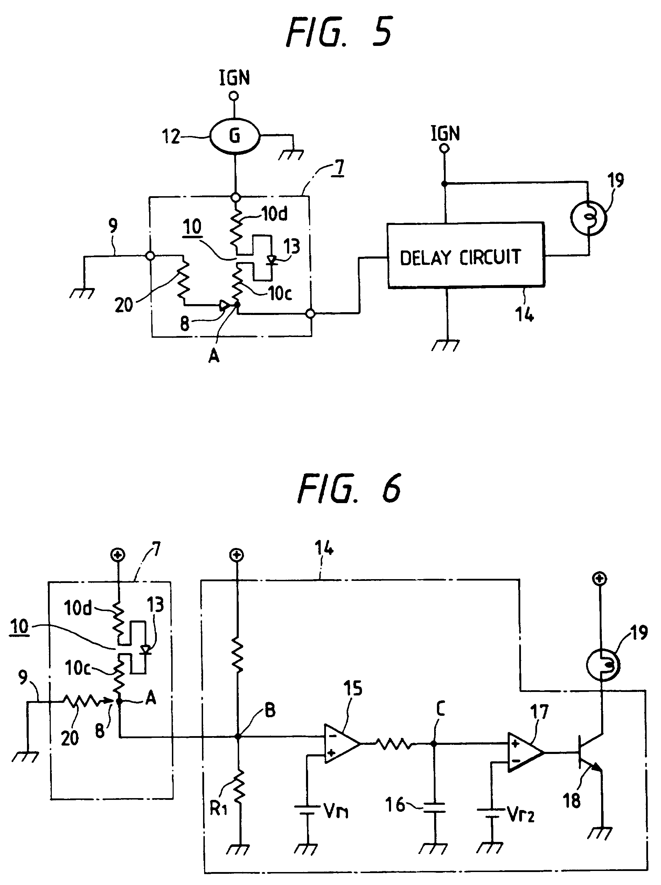

That is, as shown in Figs. 5 and 6, a resistor R₁ of the delay circuit 14 for controlling turning on/off of the electric lamp 19 is connected to a fuel empty side end point A of the resistance portion 10 and a connection point B of the resistance portion 10, and the resistor R₁ is connected to the input side of a first comparator 15. The output side of the first comparator 15 is connected to a capacitor 16, and a connection point C of the first comparator 15 between the capacitor 16 is connected to the input side of a second comparator 2-. Further, the output side of the second comparator 17 is connected to a switching transistor 18, and the switching transistor 18 is connected to the electric lamp 19 for illuminating a warning symbol of the residual amount of fuel from its back surface so as to light the warning symbol.

In the liquid level detection apparatus 1, when the contact 8 sliding on the resistance portion 10 is located at a resistance portion 10d on the fuel fill-up side from the connection portion of the diode 13 to the resistance portion 10, no current flows from the power source to the contact 8 through the diode 13 so that a voltage owing to the resistor R₁ which is a voltage at the connection point B is compared with a reference voltage Vᵣ₁ in the first comparator 15. Since the voltage at the point B is larger than the reference voltage Vᵣ₁, a minus voltage is outputted from the first comparator 15 so that a current flows from the capacitor 16 to the first comparator 15 and an L-level signal is outputted from the second comparator 17. The switching transistor 18 does not operate in response to the L-level signal so that the electric lamp 19 is not turned on.

When the contact 8 displaces on the resistance portion 10 with decrease of a residual amount of fuel so as to reach the resistance portion 10c on the fuel empty side from the connection portion of the diode 13 to the resistance portion 10, on the contrary, a current flows from the power source to the contact 8. When the contact 8 further displaces from this state to the point A of the resistance portion 10 at the fuel empty side, the voltage at the connection point B decreases and the value thereof is compared in the first comparator 15. Since this voltage value is smaller than the reference voltage Vᵣ₁, a plus voltage is outputted from the first comparator 15 and a current flows from the first comparator 15 to the capacitor 16. Then, when charges become sufficient in the capacitor 16, a voltage at the connection point C to be compared in the second comparator 17 is larger than the reference voltage Vᵣ₂ so that an H-level signal is outputted from the second comparator 17 to cause the switching transistor 18 to operate to turn on the electric lamp 19 so that the indication of the warning symbol of the residual amount of fuel is lighted.

The reason why the capacitor 16 is charged in this case is to prevent the electric lamp 19 from being frequently turned on/off by the vibration of the liquid surface when the liquid surface vibrates because of vibration or the like.

In the foregoing conventional liquid level detection apparatus, however, when the contact 8 sliding on the resistance portion 10 of the resistance plate 7 is located at the fuel empty side end point A of the resistance portion 10, as shown in Figs. 5 and 6, an over-current sometimes flows from the delay circuit 14 to the contact 8 if a layer-short is generated in the delay circuit 14. Since a small resistor in the form of such as an earth spring 20 or the like is provided in the contact holder 9 for holding the contact 8, on the other hand, there is such a possibility that, according to circumstances, the small resistor generates heat because of the over-current to thereby fuse or ignite the resin frame 4 on which the resistance plate 7 is provided.

Another prior art liquid level detection apparatus (EP-A-0 01 050) comprises a frame, a float arm, a contact holder and a resistance plate provided on said frame as indicated in the precharacterizing part of claim 1, but no delay circuit.

A further prior art liquid level detection apparatus (GB-A-2 047 495) comprises in addition to the above-mentioned components of the prior art apparatus a delay circuit connected to an end of said fuel empty side of said resistance portion for energizing a warning lamp when the contact sliding on the resistance portion is located at the fuel empty side end point of the resistance portion.

In view of the foregoing, the object of the invention is to provide a liquid level detection apparatus in which any over-current is prevented from flowing from the delay circuit to the contact even if a layer short is generated in a delay circuit for controlling a residual fuel amount warning mechanism.

In order to attain the above object, according to the present invention, the liquid level detection apparatus as indicated in the precharacterizing part of claim 1 is characterized in that a protection means for preventing an over current from flowing from said delay circuit to said contact is provided at a connection portion between the fuel empty side end of the resistance portion of the resistance end plate and the delay circuit.

Thus, when the contact sliding on the resistance portion is located at the fuel empty-side end of the resistance portion, any over-current is prevented from flowing from the delay circuit to the contact even if a layer short occurs in the delay circuit so that heat generation or the like due to the over-current on the contact can be prevented.

### BRIEF DESCRIPTION OF THE DRAWINGS

Fig. 1 is a diagram showing an embodiment of the resistance plate to be used in the liquid level detection apparatus according to the present invention.

Fig. 2 is a circuit diagram of the liquid level detection apparatus of Fig. 1.

Fig. 3 is a schematic diagram for explaining the whole conventional liquid level detection apparatus.

Fig. 4 is a diagram showing an example of the resistance plate to be used in the conventional liquid level detection apparatus.

Fig. 5 is a circuit diagram of the conventional liquid level detection apparatusof Fig. 4.

Fig. 6 is a circuit diagram of the delay circuit.

### DETAILED DESCRIPTION OF THE PREFERRED EMBODIMENT

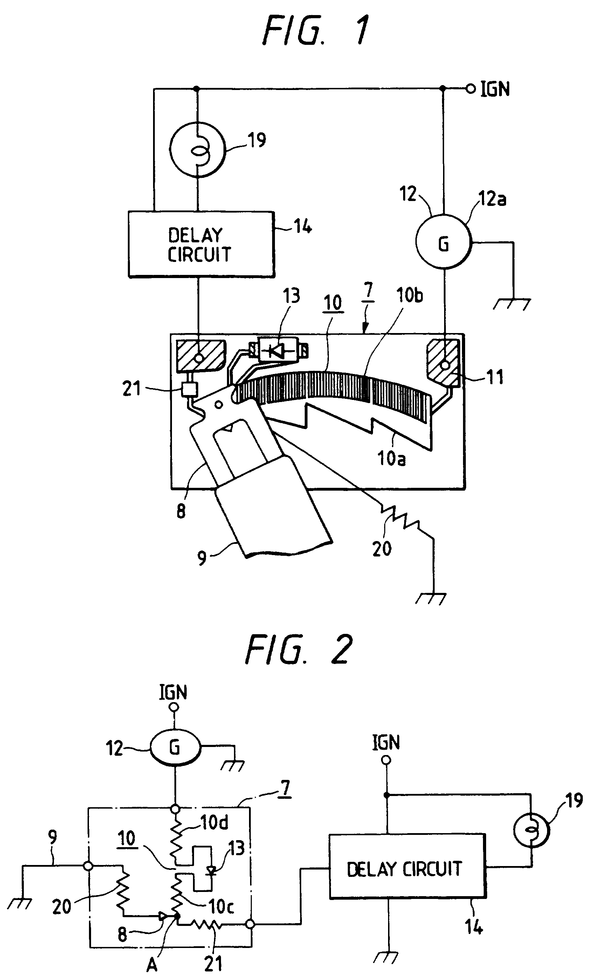

Figs. 1 and 2 show an embodiment of a resistance plate 7 to be used in the liquid level detection apparatus according to the present invention. The resistance plate 7 has a resistance portion 10 on which an RuO₂ resistor 10a and an Ag conductor 10b are formed through patterning, and further has an electrode portion 11. A contact 8 attached on a contact holder 9 contacts with the resistance portion 10 and a movement 12a of a fuel meter 12 disposed on a meter board is connected to the electrode portion 11. Further, a diode 13 connected to an end portion of the resistance portion 10 corresponding to the fuel empty side is provided on the resistance plate 7, and a fuel empty-side end point A of the resistance portion 10 is connected to a delay circuit 14 for controlling turning on/off of an electric lamp 19 for indicating a warning symbol of a residual amount of fuel.

Further, in this embodiment, a protection resistor 21 made of the same RuO₂ material as that forming the resistance portion 10 is formed at a connection portion between the fuel empty-side end point A of the resistance portion 10 and the delay circuit 14 on the resistance plate 7. The protection resistor 21 is formed simultaneously with formation of the resistance portion 10 so as to be connected between the fuel empty-side end point A of the resistance portion 10 and the delay circuit 14. Therefore, the protection resistor 21 gives no influence at all onto the resistance value of the resistance portion 10 and gives no influence onto the characteristic of the movement 12a of the fuel meter 12.

In this embodiment, a float arm rotates with up/down movement of a float and the contact 8 slides on the resistance portion 10 of the resistance plate 7 through the contact holder 9 to thereby change the contact position of the contact 8 so that the resistance value of the resistance portion 10 is changed and a current flowing into the movement 12a is changed in accordance with the change of the resistance value so as to perform an indication corresponding to the liquid level in the fuel meter 12.

When the contact 8 sliding on the resistance portion 10 displaces from the connection portion between the diode 13 and the resistance portion 10 to a resistance portion 10c at the fuel empty side, the electric lamp 19 controlled by the delay circuit 14 connected to the fuel empty-side end point A of the resistance portion 10 is turned on to indicate a warning symbol for the residual amount of fuel.

In this case, the protection resistor 21 is formed so as to be connected between the fuel empty-side end point A of the resistance portion 10 and the delay circuit 14 in this embodiment, so that when the contact 8 is located at the fuel empty-side end point A of the resistance portion 10, any over-current can be prevented from flowing from the delay circuit 14 to the contact 8 even if a layer short is generated in the delay circuit 14 so that such danger that a small resistor such as an earth spring 20 or the like provided in the contact holder 9 for holding the contact 8 generate heat because of the over-current to thereby fuse or ignite the resin frame on which the resistance plate 7 is provided can be prevented from being generated.

## Claims

1. A liquid level detection device apparatus (1) comprising:
a frame (4) provided to project in a fuel tank (2);
a float arm (5) having a float (6) attached to one end portion of said arm, the other end of said float arm (5) being rotatably attached at said frame (4);
a contact holder (9), for holding a contact (8), attached on the other end of said float arm (5);
a resistance plate (7) provided on said frame (4), said resistance plate (7) having a resistance portion (10) connected to a diode (13) at an end portion of said resistance plate corresponding to a fuel empty side, and
a delay circuit (14) connected to an end (A) of said fuel empty side of said resistance portion (10), said delay circuit (14) through which a residual fuel amount warning mechanism (17,18,19,) is controlled;
wherein a level of liquid surface is detected on a basis of a change of a resistance value caused with displacement of said float (6) in said liquid surface;
**characterized by**
a protection means (21) for preventing an over current from flowing from said delay circuit (14) to said contact (8), said protection means (21) being disposed between said end (4) of said fuel empty side of said resistance portion (10) of said resistance plate (7) and said delay circuit (14).

2. A liquid level detecting device as claimed in claim 1, wherein the arrangement is such that when said contact (8) sliding on said resistance portion (10) is located at said fuel empty side end (A) of said resistance portion (10), any over current is prevented by said protection means (21).

3. A liquid level detecting device as claimed in claim 1, wherein said protection means (21) includes a resistance.

4. A liquid level detecting device as claimed in claim 3, wherein said resistance (21) is made of the same material of said resistance plate (10).

## Patentansprüche

1. Apparat (1) zur Flüssigkeitspegelerfassung mit:
einem in einen Kraftstofftank (2) hineinragenden Rahmen (4);
einem Schwimmerarm (5), der einen Schwimmer (6) hat, der an einem Endteil des Arms angebracht ist, wobei das andere Ende des Schwimmerarms (5) drehbar an dem Rahmen (4) angebracht ist;
einem einen Kontakt (8) haltenden Kontakthalter (9), der an dem anderen Ende des Schwimmerarms (5) angebracht ist;
einer auf dem Rahmen (4) vorgesehenen Widerstandsplatte (7), die einen Widerstandsteil (10) hat, der an einem Endteil der Widerstandsplatte, der einer Kraftstoff-Leerseite entspricht, mit einer Diode (13) verbunden ist, und
einer Verzögerungsschaltung (14), die mit einem Ende (A) der Kraftstoff-Leerseite des Widerstandsteils (10) verbunden ist, wobei durch die Verzögerungsschaltung (14) ein Warnmechanismus (17, 18, 19) für eine Kraftstoffrestmenge gesteuert wird;
wobei ein Pegel der Flüssigkeitsoberfläche aufgrund einer Änderung des Widerstandswertes erfaßt wird, die durch eine Verschiebung des Schwimmers (6) mit der Flüssigkeitsoberfläche bedingt ist;
**gekennzeichnet durch**
eine Schutzeinrichtung (21) zum Verhindern des Fließens eines Überstroms von der Verzögerungsschaltung (14) zu dem Kontakt (8), wobei die Schutzeinrichtung (21) zwischen dem Ende (A) der Kraftstoff-Leerseite des Widerstandsteils (10) der Widerstandsplatte (7) und der Verzögerungsschaltung (14) vorgesehen ist.

2. Apparat zur Flüssigkeitspegelerfassung nach Anspruch 1, wobei die Anordnung derart ist, daß, wenn der Kontakt, der auf der Widerstandsplatte (10) gleitet, sich an dem Ende (A) der Kraftstoff-Leerseite des Widerstandsteils (10) befindet, jeglicher Überstrom von der Schutzeinrichtung (21) verhindert wird.

3. Apparat zur Flüssigkeitspegelerfassung nach Anspruch 1, wobei die Schutzeinrichtung (21) einen Widerstand umfaßt.

4. Apparat zur Flüssigkeitspegelerfassung nach Anspruch 3, wobei der Widerstand (21) aus dem gleichen Material wie das der Widerstandsplatte (10) hergestellt ist.

## Revendications

1. Appareil de détection du niveau d'un liquide (1), comprenant :
- un cadre (4) prévu de façon à se projeter dans un réservoir de carburant (2) ;
- un bras de flotteur (5) comportant un flotteur (6) attaché à une partie d'extrémité dudit bras, l'autre extrémité dudit bras de flotteur (5) étant attachée en rotation sur ledit cadre (4) ;
- un porte-contact (9), pour maintenir un contact (8) attaché sur l'autre extrémité dudit bras de flotteur (5) ;
- une plaquette à résistance (7) prévue sur ledit cadre (4), ladite plaquette à résistance (7) comportant une partie de résistance (10) connectée à une diode (13) à une partie terminale de ladite plaquette à résistance qui correspond à un côté vide de carburant ; et
- un circuit retard (14) connecté à une extrémité (A) dudit côté vide de carburant de ladite partie de résistance (10), ledit circuit retard (14) à travers lequel est commandé un mécanisme d'avertissement (17, 18, 19) pour la quantité résiduelle de carburant ;
dans lequel un niveau de surface du liquide est détecté en se basant sur un changement d'une valeur de résistance provoquée par le déplacement dudit flotteur (6) dans ladite surface de liquide ;
caractérisé par :
des moyens de protection (21) pour empêcher à un courant excessif de s'écouler depuis ledit circuit retard (14) jusqu'au contact (8), lesdits moyens de protection (21) étant disposés entre ladite extrémité (4) dudit côté vide de carburant de ladite partie de résistance (10) de ladite plaquette à résistance (7) et ledit circuit retard (14).

2. Appareil de détection du niveau d'un liquide selon la revendication 1, dans lequel l'agencement est tel que lorsque ledit contact (8) qui coulisse sur ladite partie de résistance (10) est situé à l'extrémité (A) du côté vide de carburant de ladite partie de résistance (10), un courant excessif quelconque n'est pas empêché par lesdits moyens de protection (21).

3. Appareil de détection du niveau d'un liquide selon la revendication 1, dans lequel lesdits moyens de protection (21) comprennent une résistance.

4. Appareil de détection du niveau d'un liquide selon la revendication 3, dans lequel ladite résistance (21) est réalisée du même matériau que ladite plaquette à résistance (10).
